# EUROPÄISCHE PATENTSCHRIFT

(11) **EP 1 774 196 B1**
(45) Veröffentlichungstag und Bekanntmachung des Hinweises auf die Patenterteilung: **03.05.2017**
(21) Anmeldenummer: 05764633.3
(22) Anmeldetag: 29.07.2005
(51) Int. Cl.: F16F 15/126, F16H 55/36

(54) **VORRICHTUNG ZUR ÜBERTRAGUNG EINES DREHMOMENTS**
DEVICE FOR TRANSMITTING A TORQUE
DISPOSITIF DE TRANSMISSION D'UN MOMENT DE ROTATION

(30) Priorität: 30.07.2004 DE 102004038420
(43) Veröffentlichungstag der Anmeldung: 18.04.2007
(73) Patentinhaber: Valeo Compressor Europe GmbH, 68766 Hockenheim (DE)
(72) Erfinder: DAMSON, Daniel, 71287 Weissach (DE); JAEGER, Matthias, E-28413 El Boalo (ES); CASTILLO REDONDO, Angel Luis, E-28300 Aranjuez (ES); CALLIES, Horst, 72202 Nagold (DE); MARTINEZ LESMA, Alfonso, E-28300 Aranjuez (ES)
(74) Vertreter: Popp, Eugen
(86) Internationale Anmeldenummer: PCT/EP2005/053710
(87) Internationale Veröffentlichungsnummer: WO 2006/013189

(56) Entgegenhaltungen:
- EP-A- 0 218 078
- EP-A- 0 619 445
- EP-A- 0 793 031
- WO-A-00/34610
- WO-A-2004/033834
- DE-A1- 19 533 446
- GB-A- 243 518
- JP-A- H08 285 012
- US-A- 5 564 981
- US-A1- 2002 132 673

## Beschreibung

Die Erfindung betrifft eine Vorrichtung gemäß dem Oberbegriff des Anspruchs 1.

### Stand der Technik

Neuere Klimakompressoren für Kraftfahrzeuge oder für andere mobile Anwendungen weisen üblicherweise eine Riemenscheibe auf, die von einem Verbrennungsmotor über einen Riementrieb angetrieben wird. Das vom Riementrieb auf die Riemenscheibe aufgebrachte Drehmoment wird von dieser zumeist auf eine drehfest mit der Kompressorwelle des Klimakompressors verbundene Nabe übertragen. Ein zwischen der Riemenscheibe und der Nabe angeordnetes Schwingungsdämpfungselement dient dazu, Schwingungen der Kurbelwelle des Verbrennungsmotors bzw. des Riementriebs sowie Schwingungen infolge von wechselnden Lasten des Klimakompressors zu dämpfen. Im Drehmomentübertragungsweg zwischen der Riemenscheibe und der Kompressorwelle ist darüber hinaus gewöhnlich noch eine Überlastsicherung vorgesehen, die bei Überlast den Kraftverlauf irreversibel unterbricht.

Eine Vorrichtung der eingangs genannten Art ist zum Beispiel aus der DE 198 60 150 A1 bekannt. Die bekannte Vorrichtung bildet einen Teil des Antriebsstrangs eines Klimakompressors eines Kraftfahrzeugs, wobei zwischen der vom Verbrennungsmotor des Kraftfahrzeugs mittels eines Riementriebs angetriebenen und mit Rippen versehenen Kunststoffriemenscheibe und der auf einer Kompressorwelle des Klimakompressors befestigten metallischen Nabe eine drehfest mit der Nabe verbundene Mitnehmerscheibe angeordnet ist, die eine Mehrzahl von in Umfangsrichtung im Abstand angeordneten Mitnehmern aufweist. Zwischen den Mitnehmern der Mitnehmerscheibe und benachbarten Rippen der Riemenscheibe sind jeweils trapezförmige Elastomerelemente angeordnet, die zur Drehmomentübertragung von der Riemenscheibe auf die Nabe und zur Schwingungsdämpfung dienen und die ein gemeinsames Ringelement bilden können. Bei hohen Drehzahlen kann es jedoch infolge der einwirkenden Zentrifugalkräfte zu einer Verformung der Elastomerelemente und damit zum Auftreten von Luftspalten zwischen diesen und den Rippen bzw. Mitnehmern kommen, was bei wechselnden Drehmomenten eine Geräuschentwicklung zur Folge hat. Auch die verhältnismäßig große Anzahl von Bauteilen der bekannten Drehmomentübertragungsvorrichtung wird als nachteilig angesehen.

Aus der US 5 564 981 A ist eine Drehmomentübertragungsvorrichtung bekannt, bei der das Drehmoment von einem Zahnrad über ein Schwningungsdämpfungselement auf eine Nabe übertragen wird. Dazu steht das Schwingungsdämpfungselement an seinem äußeren Umfang formschlüssig mit dem Zahnrad in Eingriff.

### Vorteile der Erfindung

Demgegenüber bietet die erfindungsgemäße Vorrichtung mit den im Anspruch 1 genannten Merkmalen insbesondere bei Verwendung einer Riemenscheibe aus formbarem Material, bei der eine Zahnhöhe von Zähnen ihrer Innenverzahnung in jedem Betriebszustand größer ist als eine Zahnhöhe von Zähnen der Außenverzahnung eines Schwingungsdämpfungselements, den Vorteil, dass trotz unterschiedlicher Wärmedehnungskoeffizienten eine ungehinderte Wärmedehnung der Zähne des Schwingungsdämpfungselements ermöglicht ist. Weiterhin lassen sich die freien Gestaltungsmöglichkeiten der Werkstoffe des Schwingungsdämpfungselements und der Riemenscheibe besser nutzen, um eine spielfreie Drehmomentübertragung zwischen der Riemenscheibe und der Nabe und eine Reduzierung der Anzahl der benötigten Bauteile zu ermöglichen, da sich infolge der Formbarkeit des Schwingungsdämpfungselements und der Riemenscheibe verhältnismäßig einfach und ohne zusätzliche Bauteile eine formschlüssige und gegebenenfalls auch lösbare Verbindung zwischen diesen beiden Komponenten realisieren lässt. Darüber hinaus kann die axiale Baulänge des Kompressors und der Vorrichtung durch die Verbindung mit der Nabe bzw. Riemenscheibe am inneren bzw. äußeren Umfang des Schwingungsdämpfungselements verkürzt werden.

Eine bevorzugte Ausgestaltung der Erfindung sieht vor, dass das Schwingungsdämpfungselement aus einem Elastomermaterial besteht und durch Anvulkanisieren an der Nabe drehfest und einstückig mit dieser verbunden ist, wodurch die beiden Komponenten ein einziges Bauteil bilden und ein direkter Kraftfluss zwischen dem Schwingungsdämpfungselement und der Nabe hergestellt wird.

Gemäß einer weiteren, besonders bevorzugten Ausgestaltung der Erfindung weist das im wesentlichen ringförmige Schwingungsdämpfungselement eine Außenverzahnung auf, die nach der Montage der Vorrichtung mit einer Innenverzahnung der Riemenscheibe im Zahneingriff steht und die beiden Komponenten formschlüssig miteinander verbindet. Zur Erleichterung der Montage der Vorrichtung erfolgt diese vorteilhaft durch eine axiale Relativbewegung zwischen der Nabe mit dem Schwingungsdämpfungselement und der Riemenscheibe, wobei das Schwingungsdämpfungselement formschlüssig mit der Riemenscheibe in Eingriff gebracht wird. Die Verbindung kann sowohl lösbar, als auch nicht-lösbar ausgebildet werden, indem die beiden Komponenten beispielsweise miteinander verklebt werden.

Um zu verhindern, dass sich infolge einer unterschiedlichen Wärmedehnung der Werkstoffe des Schwingungsdämpfungselements und der Riemenscheibe im Betrieb Luftspalte zwischen den beiden Verzahnungen bilden, die bei wechselnden Drehmomenten zu einer Geräuscherzeugung führen, weisen die Zähne der Innenverzahnung der Riemenscheibe und die Zähne der Außenverzahnung des Schwingungsdämpfungselements vorzugsweise spielfrei gegeneinander anliegende Zahnflanken auf.

Wegen der größeren Festigkeit des Werkstoffs der Riemenscheibe sieht eine weitere zweckmäßige Ausgestaltung der Erfindung vor, dass deren Zähne am Zahnfuß deutlich geringere Zahnbreiten als die Zähne des Schwingungsdämpfungselements aufweisen, so dass die Zähne vergleichbare Verformungswiderstände besitzen und die Verformung des Schwingungsdämpfungselements im Wesentlichen auf einen Bereich zwischen seiner auf die Nabe aufvulkanisierten inneren Umfangsfläche und dem Fuß der Zähne begrenzt ist, während eine unerwünschte Verformung und Energieaufnahme im Bereich der Zähne selbst vermieden wird. Um eine ungehinderte Verformung des Schwingungsdämpfungselements im Bereich zwischen seiner inneren Umfangsfläche und dem Fuß der Zähne zu ermöglichen, ist darüber hinaus eine kompressorseitige Stirnfläche des Schwingungsdämpfungselements in diesem Bereich zweckmäßig in einem ausreichenden axialen Abstand von axial benachbarten Teilen der Riemenscheibe bzw. des Kompressors angeordnet.

Die zur Drehmomentbegrenzung dienende Überlastsicherung der erfindungsgemäßen Drehmomentübertragungsvorrichtung ist zweckmäßig in die Nabe integriert, die dazu vorzugsweise mit einer Sollbruchstelle versehen ist.

### Zeichnungen

Die Erfindung wird nachfolgend in einem Ausführungsbeispiel anhand der zugehörigen Zeichnungen näher erläutert. Es zeigen:
- Fig. 1:: eine perspektivische Ansicht einer erfindungsgemäßen Drehmomentübertragungsvorrichtung;
- Fig. 2:: eine teilweise weggebrochene perspektivische Ansicht der Drehmomentübertragungsvorrichtung in montiertem Zustand auf einem Klimakompressor eines Kraftfahrzeugs;
- Fig. 3:: eine Draufsicht auf einen Teil der Drehmomentübertragungsvorrichtung;
- Fig. 4:: eine teilweise weggebrochene Ansicht eines Dämpfungselements der Drehmomentübertragungsvorrichtung.

Das in der Zeichnung dargestellte Ausführungsbeispiel einer Vorrichtung 2 zur Drehmomentübertragung ist Teil eines Antriebs eines Klimakompressors 4 eines Kraftfahrzeugs und umfasst eine von einem Verbrennungsmotor (nicht dargestellt) des Kraftfahrzeugs über einen Riementrieb (nicht dargestellt) angetriebene Riemenscheibe 6, eine drehfest mit einer Kompressorwelle 8 des Klimakompressors 4 verbindbare Nabe 10, sowie ein zwischen der Riemenscheibe 6 und der Nabe 10 angeordnetes, drehfest mit der Nabe 10 verbundenes im wesentlichen ringförmiges Schwingungsdämpfungselement 12, das zur Übertragung des Drehmoments von der Riemenscheibe 6 auf die Nabe 10 und gleichzeitig zur Dämpfung von Schwingungen dient.

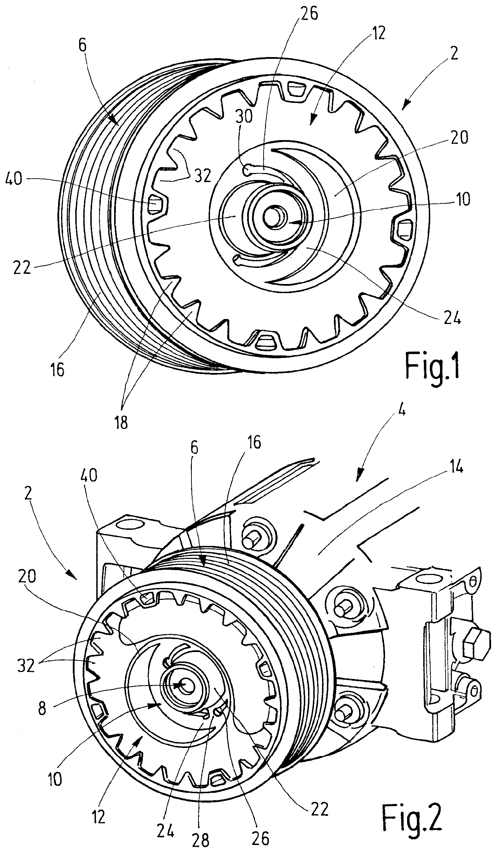

Das Schwingungsdämpfungselement, welches zwischen der Riemenscheibe 6 und der Nabe 10 angeordnet ist, ist nicht auf eine ringförmige Ausbildung, wie sie in den Figuren 1 und 2 gezeigt ist, beschränkt sondern könnte beispielsweise auch sternförmig oder anders ausgebildet sein. Darüber hinaus ist die beschriebene bzw. beanspruchte Vorrichtung zur Übertragung eines Drehmomentes auch nicht auf die Verwendung lediglich eines solchen Schwingungsdämpfungselementes beschränkt.

Die durch Spritzgießen aus thermoplastischem Kunststoffmaterial hergestellte und über ein Lager (nicht sichtbar) drehbar an einem Gehäuse 14 des Klimakompressors 4 gelagerte Poly-V-Riemenscheibe 6 weist auf ihrem äußeren Umfang eine Mehrzahl von in axialer Richtung nebeneinander angeordneten umlaufenden, im Querschnitt etwa V-förmigen Rillen 16 auf. An ihrem inneren Umfang ist die Riemenscheibe 6 mit einer Innenverzahnung versehen, die aus einer Mehrzahl von einstückig an der Riemenscheibe 6 angeformten, radial einwärts gerichteten Zähnen 18 besteht. Bei der dargestellten Vorrichtung 2 umfasst die Verzahnung insgesamt zwanzig Zähne 18, von denen vier breiter und jeweils in Winkelabständen von 90 Grad angeordnet sind, während die übrigen sechzehn schmaler und jeweils zu vieren nebeneinander in gleichen Winkelabständen zwischen zwei benachbarten breiteren Zähnen 18 angeordnet sind.

Die zweckmäßig aus Stahl und bevorzugt aus einem Kohlenstoffstahl hergestellte Nabe 10 besteht im Wesentlichen aus einem hohlzylindrischen äußeren Nabenteil 20, auf dessen äußerer Umfangsfläche das Schwingungsdämpfungselement 12 starr befestigt ist, einem auf die überstehende Kompressorwelle 8 aufsteckbaren sowie drehfest und axial unverschiebbar mit dieser verbindbaren buchsenförmigen inneren Nabenteil 22, sowie einem zwischen dem inneren und dem äußeren Nabenteil 22 bzw. 20 angeordneten radialen Verbindungsteil 24, der eine Überlastsicherung bildet, wozu der Verbindungsteil 24 mehrere im Wesentlichen in Umfangsrichtung verlaufende Aussparungen 26 aufweist. Die Aussparungen 26 sind in Umfangsrichtung durch Stege 28 getrennt, welche bei Überlast brechen und somit die Sollbruchstellen der Nabe 10 bilden. Zur Vermeidung von Spannungsspitzen sind die Stirnenden der Aussparungen 26 mit gerundeten Erweiterungen 30 versehen.

Die vorliegende Erfindung ist jedoch nicht auf diese Art von Überlastsicherung beschränkt. Weitere Überlastmechanismen sind ebenso möglich.

In vorteilhafter Weise kann auch eine Welle-Nabe-Verbindung in Form einer Kegelsitzverbindung genutzt werden. Bei diesen Verbindungen ist eine gewisse Ungenauigkeit bzgl. der axialen Lage der Teile systembedingt nicht auszuschließen, da die Toleranzen nicht unendlich klein gehalten werden können. Bei der vorgeschlagenen Vorrichtung zur Drehmomentübertragung kann die axiale Position des Dämpfungselementes im Kunststoffteil der Riemenscheibe ebenfalls variieren. Aus diesem Grunde passt die vorgeschlagene Welle-Naben-Verbindung in Form einer Kegelsitzverbindung gut mit den axialen Positionstoleranzen des Gesamtaufbaus zusammen. Ein solches System weist daher eine große Toleranz der axialen Position zwischen Welle und Nabe auf.

Das aus einem vulkanisierbaren Elastomermaterial hergestellte Schwingungsdämpfungselement 12 weist eine zylindrische innere Umfangsfläche auf, die im Ausführungsbeispiel auf die zylindrische Umfangsfläche des Nabenteils 20 aufvulkanisiert und auf diese Weise einstückig mit der Nabe 10 verbunden ist, um über diese Verbindung die von der Riemenscheibe 6 in das Schwingungsdämpfungselement 12 eingeleiteten Drehmomente in die Nabe 10 und von dort auf die Kompressorwelle 8 zu übertragen. Zur Drehmomentübertragung von der Riemenscheibe 6 auf das Schwingungsdämpfungselement 12 ist das letztere an seinem äußeren Umfang mit einer eingeformten Außenverzahnung versehen, die komplementär zur Innenverzahnung der Riemenscheibe 6 ausgebildet ist, d.h. insgesamt zwanzig Zähne 32 aufweist, die den Zähnen 18 der Innenverzahnung der Riemenscheibe 6 entsprechend durch sechzehn schmalere bzw. vier breitere Zahnlücken getrennt sind. Die Zähne 18 bzw. 32 der beiden Verzahnungen können zwischen ihrem jeweiligen Fuß und ihrem jeweiligen Scheitel eine in axialer Richtung gleichbleibende Stärke aufweisen oder können sich in Richtung ihrer Scheitel etwas verjüngen.

Bei der Montage werden die Innenverzahnung der Riemenscheibe 6 und die Außenverzahnung des Dämpfungselements 12 durch eine axiale Relativbewegung formschlüssig miteinander in Eingriff gebracht. Dabei kann die Verbindung zwischen Riemenscheibe 6 und Dämpfungselement 12 im Einzelfall sowohl lösbar als auch nicht-lösbar ausgebildet sein.

Dieser formschlüssige Eingriff, zwischen der Außenverzahnung des Schwingungsdämpfungselements 12 und der Innenverzahnung der Riemenscheibe 6, der auch lösbar sein kann, ist so ausgeführt, dass die jeweils gegenüberliegenden Zahnflanken 34 der Zähne 18 bzw. 32 der beiden Verzahnungen in jedem Betriebszustand spielfrei gegeneinander anliegen, so dass trotz unterschiedlicher Wärmedehnungskoeffizienten des Elastomermaterials des Schwingungsdämpfungselements 12 und des Kunststoffmaterials der Riemenscheibe 6 beim Betrieb des Klimakompressors 4 im gesamten möglichen Temperaturbereich kein Luftspalt zwischen benachbarten Zähnen 18 bzw. 32 der Verzahnungen entstehen und damit keine Geräuschentwicklung auftreten kann.

Neben der hier beschriebenen Lösung, in der das Schwingungsdämpfungselement 12 an die innen liegende Nabe 10 vulkanisiert wird und die Verbindung zum außen liegenden Kunststoffmaterial der Riemenscheibe 6 formschlüssig erreicht wird, könnte der feste Verbund auch am äußeren Rand der Schwingungsdämpfungselement 12 vorgesehen sein. Dieser feste Verbund zwischen Schwingungsdämpfungselement 12 und Riemenscheibe 6 kann beispielsweise ebenfalls durch vulkanisieren hergestellt werden. In diesem Fall würde innen, d.h. bei der Verbindung des Schwingungsdämpfungselementes 12 zur Nabe 10 ein lösbarer oder unlösbarer Formschluss verwendet, um das Drehmoment zu übertragen. Dabei kann jede beliebige Art von Formschluss verwendet werden.

Wegen der unterschiedlichen Wärmedehnungskoeffizienten des Elastomermaterials des Schwingungsdämpfungselements 12 und des Kunststoffmaterials der Riemenscheibe 6 sind außerdem die Zahnhöhen der beiden Verzahnungen so ausgelegt, dass die Zähne 32 der Außenverzahnung des Schwingungsdämpferelements 12 in keinem Betriebszustand eine größere Zahnhöhe aufweisen als die Zähne 18 der Innenverzahnung der Riemenscheibe 6. Allgemein wird die Zahnhöhe der Zähne 18 bzw. 32 der beiden Verzahnungen von dem zu übertragenden Drehmoment und den Festigkeitseigenschaften des verwendeten Kunststoff- bzw. Elastomermaterials abhängig sein. Da das letztere eine geringere Festigkeit als das erstere besitzt, weisen die Zähne 32 der Außenverzahnung des Schwingungsdämpfungselements 12 an ihrem Zahnfuß eine deutlich größere Breite als die Zähne 18 der Innenverzahnung der Riemenscheibe 6 auf.

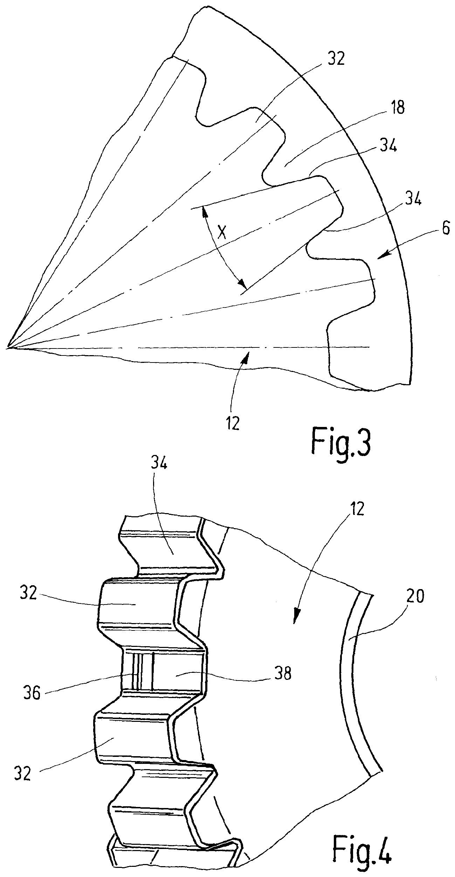

Für die Zähne 18, 32 wird eine Zahngeometrie bevorzugt, bei welcher der von entgegengesetzten Zahnflanken 34 der Zähne 18, 32 eingeschlossene Winkel X etwa 30 Grad beträgt, wie am besten in Fig. 3 dargestellt. Grundsätzlich kann jedoch auch ein beliebiger anderer spitzer Winkel X zwischen 0 Grad und 90 Grad gewählt werden.

Die Dämpfungsfunktion des Schwingungsdämpfungselements 12 beruht auf einer Scherbeanspruchung des Elastomermaterials im Bereich zwischen seiner Außenverzahnung und seiner mit der Nabe 10 verbundenen inneren Umfangsfläche, welche Scherbeanspruchung beim Auftreten einer statischen oder dynamischen Torsionskraft zwischen der Riemenscheibe 6 und der Nabe 10 in diesem Bereich hervorgerufen wird und dort zu einer Materialverformung führt, während die Zähne 32 des Schwingungsdämpfungselements 12 weitestgehend unverformt bleiben und keine Dämpfungsfunktion übernehmen. Im Bereich seiner Verformung zwischen der Außenverzahnung und der inneren Umfangsfläche weist das Schwingungsdämpfungselement 12 des Ausführungsbeispiels vorzugsweise eine in axialer Richtung gleichbleibende Dicke auf und ist mit seiner in der Zeichnung nicht sichtbaren kompressorseitigen Stirnfläche in einem gewissen axialen Abstand von axial benachbarten Teilen der Riemenscheibe 6 bzw. des Klimakompressors 4 angeordnet, so dass sich in diesem Bereich das Schwingungsdämpfungselement 12 ungehindert verformen kann.

Vorteilhaft kann es sein, die Dicke des Dämpfungselementes 12 in seinem Innenbereich, d.h. im nabennahen Bereich zu erhöhen, um eine konstante Materialquerschnittsfläche zu erreichen. Wird die Materialdicke im Innenbereich des Dämpfungselementes nicht erhöht, weist das Dämpfungselement also beispielsweise zwei parallele, ebene Begrenzungsflächen auf, so verhält sich ein derartiger Dämpfer nicht linear. Dies führt zu einer Zunahme der Deformation insbesondere im nabennahen Innenbereich des Dämpfungselementes, was zu einer Beeinträchtigung der Funktionsweise der Vorrichtung zur Drehmomentübertragung führen kann.

Um die Außenverzahnung des Schwingungsdämpfungselements 12 in Bezug zur Innenverzahnung der Riemenscheibe 6 in axialer Richtung zu fixieren und ein Auswandern des Elastomermaterials infolge von Zentrifugalkräften oder infolge einer durch die Scherbelastung bedingten Verformung zu verhindern bzw. im Falle eines Bruchs der Überlastsicherung im Verbindungsteil 24 der Nabe 10 das Schwingungsdämpfungselement 12 in Bezug zur Riemenscheibe 6 festzuhalten, ist bei der in der Zeichnung dargestellten Vorrichtung 2 das Schwingungsdämpfungselement 12 jeweils im Bereich der vier breiteren Zahnlücken seiner Außenverzahnung mit einem in das Elastomermaterial eingeformten Halteelement in Form eines in Umfangsrichtung verlaufenden, über den Boden 38 der Zahnlücke radial überstehenden Wulstes 36 versehen, der nach einer elastischen Stauchung während der Montage der Vorrichtung 2 in eine komplementären Ausnehmung (nicht dargestellt) im Scheitel von einem der vier breiteren Zähne 18 der Innenverzahnung der Riemenscheibe 6 eingreift. Diese letzteren Zähne 18 weisen jeweils eine axiale Öffnung 40 auf, die in die vom Kompressor 4 abgewandte Stirnfläche der Riemenscheibe 6 mündet und sowohl eine visuelle Überprüfung eines korrekten Sitzes des Wulstes 36 in der Ausnehmung als auch bei Bedarf ein Lösen der Verbindung zwischen den Halteelementen 36 und der Riemenscheibe 6 gestattet.

Des weiteren könnte das Formschlusselement zwischen Dämpfer und Riemenscheibe auch vollkommen symmetrisch sein. Da das Dämpfungselement unter Vorspannung in die Riemenscheibe eingesetzt wird, wird das Dämpfungselement aufgrund des herrschenden Reibschlusses auch bei einem Brechen der Überlastkupplung in seiner Position gehalten.

Die Erfindung ist nicht auf die Anwendung bei einem Kompressor, insbesondere einem Klimakompressor beschränkt.

## Patentansprüche

1. Vorrichtung zur Übertragung eines Drehmoments von einem Verbrennungsmotor auf ein von diesem anzutreibendes Aggregat, insbesondere einen Klimakompressor eines Kraftfahrzeugs, mit einer vom Verbrennungsmotor über einen Riementrieb angetriebene Riemenscheibe (6) aus einem Kunststoffmaterial und einen drehfest mit einer Welle des Zusatzaggregats verbindbaren Nabe (10) und zumindest einem zwischen der Riemenscheibe (6) und der Nabe (10) angeordneten Schwingungsdämpfungselement (12) aus einem Elastomermaterial, wobei das Schwingungsdämpfungselement (12) an seinem inneren Umfang starr mit der Nabe (10) verbunden ist und an seinem äußeren Umfang formschlüssig mit der Riemenscheibe (6) im Eingriff steht, und wobei das Schwingungsdämpfungselement (12) eine Außenverzahnung aufweist, die mit einer Innenverzahnung der Riemenscheibe (6) im Zahneingriff steht, **dadurch gekennzeichnet, dass** eine Zahnhöhe von Zähnen (18) der Innenverzahnung der Riemenscheibe (6) in jedem Betriebszustand größer ist als eine Zahnhöhe von Zähnen (32) der Außenverzahnung des Schwingungsdämpfungselements (12), um trotz unterschiedlicher Wärmedehnungskoeffizienten eine ungehinderte Wärmedehnung von dessen Zähnen zu ermöglichen.

2. Vorrichtung nach Anspruch 1, **dadurch gekennzeichnet, dass** das Schwingungsdämpfungselement (12) an die Nabe (10) anvulkanisiert ist.

3. Vorrichtung nach Anspruch 1 oder 2, **dadurch gekennzeichnet, dass** bei einer Montage die Nabe (10) nebst Schwingungsdämpfungselement (12) und die Riemenscheibe (6) durch eine axiale Relativbewegung in Eingriff bringbar sind.

4. Vorrichtung nach einem der vorangehenden Ansprüche, **dadurch gekennzeichnet, dass** das Schwingungsdämpfungselement (12) lösbar mit der Riemenscheibe (6) in Eingriff steht.

5. Vorrichtung nach einem der vorangehenden Ansprüche, **dadurch gekennzeichnet, dass** das Schwingungsdämpfungselement (12) im Wesentlichen ringförmig ausgebildet ist.

6. Vorrichtung nach Anspruch 1, **dadurch gekennzeichnet, dass** die Zähne (18) der Innenverzahnung der Riemenscheibe (6) und die Zähne (32) der Außenverzahnung des Schwingungsdämpfungselements (12) spielfrei gegeneinander anliegende Zahnflanken (34) aufweisen.

7. Vorrichtung nach Anspruch 1 oder 6, **dadurch gekennzeichnet, dass** gegenüberliegende Zahnflanken (34) von benachbarten Zähnen (18) der Innenverzahnung der Riemenscheibe (6) und entgegengesetzte Zahnflanken (34) von Zähnen (32) der Außenverzahnung des Schwingungsdämpfungselements (12) einen Winkel von weniger als 90 Grad und vorzugsweise von etwa 30 Grad einschließen.

8. Vorrichtung nach einem der Ansprüche 1, 6 oder 7, **dadurch gekennzeichnet, dass** eine Zahnbreite von Zähnen (18) der Innenverzahnung der Riemenscheibe (6) kleiner ist als eine Zahnbreite von Zähnen (32) der Außenverzahnung des Schwingungsdämpfungselements (12).

9. Vorrichtung nach einem der Ansprüche 1 oder 6 bis 8, **dadurch gekennzeichnet, dass** das Schwingungsdämpfungselement (12) im Bereich zwischen der Nabe (10) und dem formschlüssigen Eingriff mit der Riemenscheibe (6) in einem axialen Abstand von axial benachbarten Teilen der Riemenscheibe (6) angeordnet ist.

10. Vorrichtung nach einem der vorangehenden Ansprüche, **dadurch gekennzeichnet, dass** die Nabe (10) eine Überlastsicherung (26, 28) umfasst.

## Claims

1. A device for transmitting a torque from a combustion engine to a unit to be driven by the same, in particular an air-conditioning compressor of a motor vehicle, having a pulley (6) of a plastic material driven by the combustion engine via a belt drive, and a hub (10) that can be connected to a shaft of the additional unit in a rotationally fixed manner, and at least one vibration damping element (12) of an elastomer material that is arranged between the pulley (6) and the hub (10), wherein the vibration damping element (12), at its inner circumference, is rigidly connected to the hub (10), and, at its outer circumference, is in engagement with the pulley (6) in a form-fit manner, and wherein the vibration damping element (12) has an external toothing which is in tooth engagement with an internal toothing of the pulley (6), **characterized in that** a tooth height of teeth (18) of the internal toothing of the pulley (6) is higher in any operating state than a tooth height of teeth (32) of the outer toothing of the vibration damping element (12) so as to enable an unhindered thermal expansion of its teeth despite different thermal expansion coefficients.

2. The device according to claim 1, **characterized in that** the vibration damping element (12) is vulcanized to the hub (10).

3. The device according to claim 1 or 2, **characterized in that** during assembly the hub (10) along with the vibration damping element (12), and the pulley (6) may be engaged by an axial relative movement.

4. The device according to any one of the preceding claims, **characterized in that** the vibration damping element (12) is in detachable engagement with the pulley (6).

5. The device according to any one of the preceding claims, **characterized in that** the vibration damping element (12) substantially is formed to be annular.

6. The device according to claim 1, **characterized in that** the teeth (18) of the internal toothing of the pulley (6) and the teeth (32) of the external toothing of the vibration damping element (12) have tooth flanks (34) that are mutually abutting without play.

7. The device according to claim 1 or 6, **characterized in that** facing tooth flanks (34) of adjacent teeth (18) of the internal toothing of the pulley (6), and opposite tooth flanks (34) of teeth (32) of the external toothing of the vibration damping element (12) enclose an angle of less than 90 degrees, and preferably of about 30 degrees.

8. The device according to any one of claims 1, 6 or 7, **characterized in that** a tooth width of teeth (18) of the internal toothing of the pulley (6) is smaller than a tooth width of teeth (32) of the external toothing of the vibration damping element (12).

9. The device according to any one of claims 1 or 6 to 8, **characterized in that** the vibration damping element (12) is disposed in the area between the hub (10) and the form-fit engagement with the pulley (6) at an axial distance from axially adjacent parts of the pulley (6).

10. The device according to any one of the preceding claims, **characterized in that** the hub (10) comprises an overload protection (26, 28).

## Revendications

1. Dispositif destiné à transmettre un couple d'un moteur de combustion à un groupe devant être entraîné par celui-ci, en particulier un compresseur de climatisation d'un véhicule automobile, comprenant une poulie à courroie (6) entraînée par le moteur de combustion via un mécanisme à courroie et composée d'un matériau synthétique et un moyeu (10) pouvant être relié de manière fixe en rotation à un arbre du groupe supplémentaire et au moins un élément d'amortissement de vibration (12) disposé entre la poulie à courroie (6) et le moyeu (10) et composé d'un matériau élastomère, sachant que l'élément d'amortissement de vibration (12) est relié de manière rigide au moyeu (10) en sa circonférence intérieure et est en prise par complémentarité de forme avec la poulie à courroie (6) en sa circonférence extérieure, et sachant que l'élément d'amortissement de vibration (12) présente une denture extérieure qui est en engrènement avec une denture intérieure de la poulie à courroie (6), **caractérisé en ce qu'**une hauteur de dents (18) de la denture intérieure de la poulie à courroie (6) est supérieure dans chaque état de fonctionnement à une hauteur de dents (32) de la denture extérieure de l'élément d'amortissement de vibration (12), afin de permettre une dilatation thermique sans entrave de ses dents malgré des coefficients de dilatation thermique différents.

2. Dispositif selon la revendication 1, **caractérisé en ce que** l'élément d'amortissement de vibration (12) est attaché par vulcanisation au moyeu (10).

3. Dispositif selon la revendication 1 ou 2, **caractérisé en ce que**, lors d'un montage, le moyeu (10) assorti de l'élément d'amortissement de vibration (12) et la poulie à courroie (6) peuvent être mis en prise par un mouvement relatif axial.

4. Dispositif selon l'une des revendications précédentes, **caractérisé en ce que** l'élément d'amortissement de vibration (12) est en prise de manière détachable avec la poulie à courroie (6).

5. Dispositif selon l'une des revendications précédentes, **caractérisé en ce que** l'élément d'amortissement de vibration (12) est constitué essentiellement en forme annulaire.

6. Dispositif selon la revendication 1, **caractérisé en ce que** les dents (18) de la denture intérieure de la poulie à courroie (6) et les dents (32) de la denture extérieure de l'élément d'amortissement de vibration (12) présentent des flancs de dent (34) qui sont placés sans jeu les uns contre les autres.

7. Dispositif selon la revendication 1 ou 6, **caractérisé en ce que** des flancs de dent (34) se faisant face de dents (18) adjacentes de la denture intérieure de la poulie à courroie (6) et des flancs de dent (34) opposés de dents (32) de la denture extérieure de l'élément d'amortissement de vibration (12) englobent un angle de moins de 90 degrés et de préférence de quelque 30 degrés.

8. Dispositif selon l'une des revendications 1, 6 ou 7, **caractérisé en ce qu'**une largeur de dents (18) de la denture intérieure de la poulie à courroie (6) est inférieure à une largeur de dents (32) de la denture extérieure de l'élément d'amortissement de vibration (12).

9. Dispositif selon l'une des revendications 1 ou 6 à 8, **caractérisé en ce que** l'élément d'amortissement de vibration (12) est disposé dans la zone entre le moyeu (10) et la prise par complémentarité de forme avec la poulie à courroie (6) à une distance axiale de pièces axialement adjacentes de la poulie à courroie (6).

10. Dispositif selon l'une des revendications précédentes, **caractérisé en ce que** le moyeu (10) comprend une protection anti-surcharge (26, 28).
